Europäisches Patentamt

European Patent Office

Office européen des brevets

(11) Publication number: **0 327 233**
**A2**

(12) # EUROPEAN PATENT APPLICATION

(21) Application number: 89300612.2

(51) Int. Cl.4: **B60S 1/38**

(22) Date of filing: 23.01.89

(30) Priority: 05.02.88 US 152633

(43) Date of publication of application:
**09.08.89 Bulletin 89/32**

(84) Designated Contracting States:
**AT BE CH DE FR GB IT LI LU NL SE**

(71) Applicant: **ITEMSTAY LIMITED**
**14 Dominion Street**
**London EC2M 2RJ(GB)**

(72) Inventor: **Sussich, Marino Robert**
**316 Blackshaws Road**
**Altona North Victoria 3025(AU)**

(74) Representative: **Lambert, Hugh Richmond et al**
**D. YOUNG & CO. 10 Staple Inn**
**London, WC1V 7RD(GB)**

(54) **Wiper refill.**

(57) A wiper blade assembly for motor vehicles, comprising a pair of parallel flared wiper blades (201, 202) each provided with its own flanged base member (206, 207) by means of which the two blades may be mounted in parallel on a common base attachment or backing member (220) which may be mounted on a wiper arm of a vehicle; characterised in that the two base members (206, 207) are laterally spaced one from the other to provide a gap (210) therebetween through which dirt and other material collected by the blades can escape to prevent accumulation therebetween, said assembly being such that said backing member (220) may comprise an elongate channel (221) therealong prallel to said gap (210) for conveying material passed through the gap (210) to be discharged at the end of said channel.

FIG. 2

Xerox Copy Centre

## WIPER REFILL

This invention relates to automated wipers for motor vehicle windscreens and it is an improvement on wipers of the type described in our previous European patent application published as EP-A-0 232 598.

There are many well known types of automated wipers. Perhaps the best known type are windscreen wipers for vehicles.

In general terms, most automated wipers include three main parts as follows:

    (1) a motor;
    (2) an arm member;
    (3) a wiper refill which comprises a plastic backing and a blade member (i.e. a wiping rubber or a wiping flare).

A problem associated with automated wipers is that they may tend to be ineffective against heavy dirt or fog and many repetitions of the wiper are required. To alleviate this problem an improved type of multi-bladed automated wiper has been described in our previous European Patent Application EP-A-0 232 598. In accordance with that disclosure, a wiper blade refill assembly for the wiper arm of a motor vehicle windscreen and other wipers is provided comprising two preferably flared blade members mounted in parallel adjacent one another on a support or base member, the two blade members defining therebetween a substantially closed U-shaped channel, which when the wiper is in use with the blades in contact with the surface to be wiped, define a substantially enclosed tubular space or void between the wiper blades and the surface being wiped, thereby improving contact between the blades and the surface, and preventing lift-off. When such wipers are in use the blade of the leading wiper refil removes the bulk of the material to be removed from the surface to be cleaned and the blade of the trailing wiper refill removes substantially any material that the blade of the leading refill does not remove.

Another problem associated with automated wipers is that when they are in use, the surface(s) of the wiper blade or blades adapted to remove water and the like from a surface tend to separate (i.e. lift) from the surface. According to the invention embodiment described in EP-A-0 232 598, and mentioned above, this problem is alleviated in the structure of the wiper blade refill wherein a void space is created between the two wiper blades and the surface to be wiped such that the tendency of the wipers to lift from the surface is reduced.

However, in windscreen wipers of the type described in the previous application, there is a tendency for dirt and material collected from the wiped surface to accumulate in the tubular space or void between the wiper blades.

Additionally, a problem encountered with all windscreen wiper blades is that they are subject to permanent set from exposure to the sun's ultra-violet rays, while they are at the bottom of the windscreen in an unused position. Wipers that take a permanent set can attack an associated windscreen at an incorrect angle, which results in wiping deficiencies. Although some twin blade wipers have the outer blade protecting the inner blade from exposure to various weathering effects, the problem of permanent wiper set has not previously been satisfactorily alleviated.

Thus, a further improvement to the invention disclosed in EP-A-0 232 598 would at least be to alleviate the problem of accumulation of dirt and mateirals collected between the wiper blades.

In accordance with the present invention, this is achieved by incorporating a central, longitudinal channel between and generally parallel to an adjacent pair of wiper blade members of the general type disclosed in the previous application. For use in combination with such an arrangement, the blade backing member which mounts the blade assembly on the wiper arm preferably also includes an escape channel for passage and escape of dirt and other materials from between the blades.

As a result of such an arrangement and combination, material between the blades is allowed to more readily escape from between the wiper blades into the longitudinal backing channel, thus facilitating operation of the wipers without build-up of foreign matter which would otherwise substantially interfere with the flexing and wiping action of the wiping rubbers.

The invention is further described in more detail with reference to the accompanying drawings, in which:

Figure 1 illustrates a perspective view of a pair of blade members of indefinite length in accordance with the present invention;

Figure 2 illustrates a cross-sectional view of the arrangement shown in Figure 1, showing an operative combination with an especially adapted backing member for use therewith.

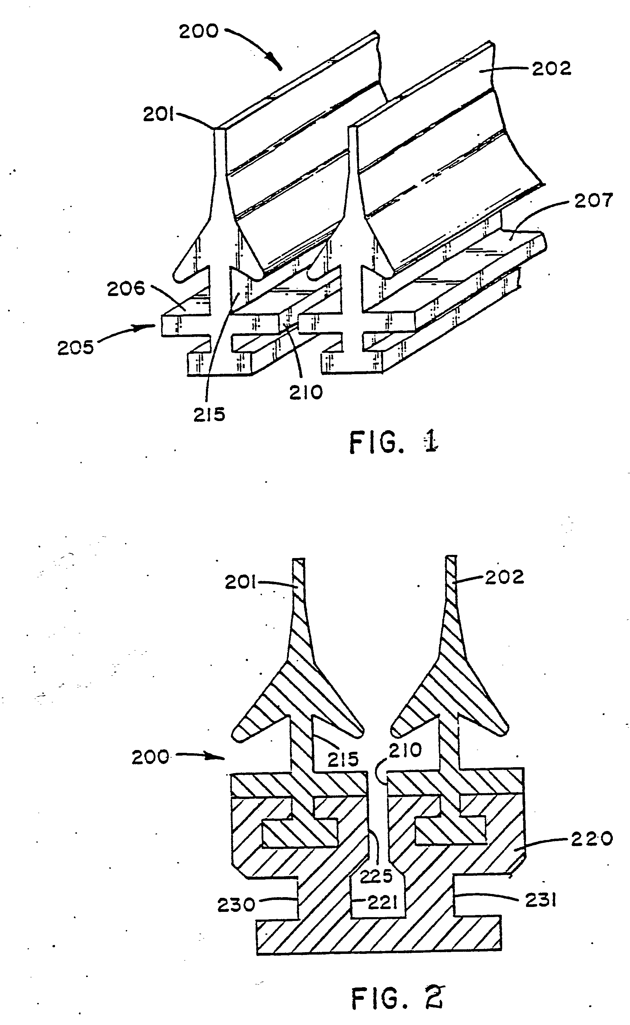

In Figure 1, a multi-blade arrangement 200 is illustrated which shows two identical separate but parallel wiping flares 201 and 202, each with its own integral flanged base member indicated generally at 205. The arrangement is generally similar to that shown in Figures 3 and 4 of the drawings accompanying EP-A-0 232 598, except that the two separate sections or flanges 206 and 207 of the base arrangement 205 are spaced one from the other to provide an elongate escape channel, space or gap 210 therebetween. Thus foreign material which may find its way into space 215 can escape therefrom through channel 210. Advantages of this will be apparent from examination of Figure 2.

Referring to Figure 2, the two parallel blade members 201 and 202 are mounted on a common base attachment or backing member 220 which serves to mount the twin bladed assembly on the wiper arm (not shown). Backing member 220 is similarly provided with an elongated longitudinal escape channel 221 extending generally between and substantially parallel to adjacent wiping flares 201 and 202. Channel 221 is provided in communication with gap 210 along slot 225. It is readily understood that when the arrangement of Figure 2 is used, foreign material which may build up in space 215 can readily escape therefrom by passage through gap 210 and slot 225 into channel 221 and backing 220. This foreign material can flow outwardly from the entire arrangement through end sections of channel 221, not shown. As a result, wiper efficiency is increased, as foreign material which can build up between blade members 201 and 202 is provided with an escape channel.

It is noted that backing 220 is provided with independent flexors or flex points 230 and 231, which facilitate independent flexing of blade members 201 and 202. As a result, generally the backing facilitates flexing only of the lead blade during use, at a substantial deflected angle due to contact with the windscreen. The result is that wiper load is somewhat minimized, since an elongate flat section of the second, or following blade, in contact with the windscreen is generally avoided. It will be understood that while these embodiments generally facilitate independent wiper movement, the mounting block of Figure 5 in European Patent Application EP-A-0 232 598 does not include dependent flex or flexor points and thus does not facilitate independent wiper blade flexing to near as great an extent.

As a result of the combination shown in Figure 2, the load on the wiper motor is reduced, since overall frictional drag is substantially reduced. Again, this results from an arrangement which permits the lead blade to take up most of the flexing, and permits the following blade to be operated substantially perpendicularly to the windscreen.

In addition, permanent set from the sun's UV rays is generally reduced, if not mimimized. A reason for this is that the arrangement shown in Figure 1, and the combinations shown in Figure 2, is designed to stop generally perpendicular and parallel to the windscreen. Thus, the sun is unlikely to set the wipers in an incorrect angle of attack relative to the windscreen.

Wiper refills as illustrated in the drawings have been produced and a series of standard experiments have been performed. It has been surprisingly discovered that if such a wiper blade is connected to an ordinary wiper arm then the tendency of the wiper to lift from the surface to be wiped is reduced, the accumulation of material between wiper blades is reduced, and additionally permanent set from the sun's UV rays is generally moderated.

Finally, it is to be understood that various other modifications and/or alterations may be made without departing from the spirit of the present invention as outlined herein.

## Claims

1. A wiper blade assembly for motor vehicles, said assembly comprising a pair of parallel flared wiper blades (201, 202) each provided with its own flanged base member (206, 207) by means of which the two blades (201, 202) may be mounted in parallel on a common base attachment or backing member (220) and by means of which the assembly may be mounted on a wiper arm fitted to the vehicle, characterised in that the two base members (206, 207) of the adjacent blades are laterally spaced one from the other to provide a gap (210) therebetween through which dirt and other material collected by the blades can escape, thereby to prevent the accumulation of dirt therebetween.

2. A wiper assembly according to claim 1, characterised in that the backing member (220) comprises an open elongate channel (221) extending therealong parallel to and in open communication with said gap (210) for the collection of dirt and other material passing through that gap and for conveying that material for discharge at the end of said channel.

3. A wiper assembly according to claim 2, characterised in that the backing member (220) comprises two parallel mounting channels mounted on a common base and providing said open elongate channel (221) therebetween, each parallel mounting channel receiving the flanged base member of a respective one of said two flared wiper blades (201, 202), and being connected to said common base by independent integral flexors (230, 231).

4. A wiper blade refill assembly according to any one of the preceding claims, wherein the flared section of each blade member (201, 202) includes:

(a) a top section having a top face which, in use, contacts the surface to be wiped, said top face including two opposing side edges, two opposing downwardly and outwardly divergent side walls extending downwardly from the side edges of the top face, and a bottom face connecting the bottom edges of the side walls; and

(b) a bottom web connecting the top section to the base section.

5. A wiper blade refill assembly according to claim 4, characterised in that the divergent side walls of each blade member are mirror images.

FIG. 1

FIG. 2